# EUROPÄISCHE PATENTANMELDUNG

(11) **EP 2 416 122 A2**
(43) Veröffentlichungstag der Anmeldung: **08.02.2012**
(21) Anmeldenummer: 11176127.6
(22) Anmeldetag: 01.08.2011
(51) Int. Cl.: G01C 21/36

(54) **Verfahren zum Betrieb eines Navigationssystems**

(30) Priorität: 02.08.2010 DE 102010033043
(71) Anmelder: Navigon AG, 20251 Hamburg (DE)
(72) Erfinder: Lehnert, Sabine, D-97072 Würzburg (DE); Sollner, Daniel, D-97072 Würzburg (DE)
(74) Vertreter: von den Steinen, Axel

(57) **Zusammenfassung**

Die Erfindung betrifft ein Verfahren zum Betrieb eines Navigationssystems, umfassend eine Kartendatenspeicheeinrichtung, in der Kartendaten eines geographischen Gebietens gespeichert sind, wobei die Kartendaten auch Verkehrs- und/oder Reiseinformationen (7, 13, 14, 15, 19) bezüglich abgeschlossener geographischer Gebiete (2, 6, 12) umfassen, zumindest eine Positionsbestimmungseinrichtung, mit der die geographische Position des Navigationssystems bestimmt werden kann, eine Routenberechnungseinheit, mit der einer Bewegungsroute von einem Startpunkt zu einem Zielpunkt berechnet werden kann, zumindest eine Eingabeeinheit (25, 26), mit der Benutzereingaben getätigt werden können, zumindest eine Ausgabeeinheit (1, 5), mit der Ausgaben an einen Benutzer ausgegeben werden können, zumindest eine Profildatenbank, in der zumindest ein Benutzerprofil, umfassend zumindest eine Benutzereigenschaft, gespeichert werden kann und wobei während des Betriebs des Navigationssystems zumindest ein gespeichertes Benutzerprofil als aktives Benutzerprofil bestimmt werden kann
mit folgenden Verfahrensschritten:
a) Bestimmung der aktuellen Position des Navigationssystems (110);
b) Bestimmung des Abstandes und/oder der Abstandsänderung zwischen der aktuellen Position und zumindest einer Grenze eines abgeschlossenen geographischen Gebiets (2, 6, 12) (120);
c) Ausfiltern von relevanten Verkehrs- und/oder Reiseinformationen (7, 13, 14, 15, 19) bezüglich zumindest eines abgeschlossenen Gebiets (2, 6, 12) in Abhängigkeit vom Abstand und/oder von der Abstandsänderung zwischen der aktuellen Position und zumindest einer Grenze von zumindest einem abgeschlossenen geographischen Gebiet (2, 6, 12) und in Abhängigkeit vom aktiven Benutzerprofil;
d) Ausgabe der ausgefilterten Verkehrs- und/oder Reiseinformationen (7, 13, 14, 15, 19) mit der zumindest einen Ausgabeeinrichtung (180).

## Beschreibung

Bekannte Navigationssysteme verfügen im Allgemeinen über eine Kartendatenspeichereinrichtung, in der geographische Karten, insbesondere Straßenkarten, für ein großes geographisches Gebiet gespeichert sind. Mit einer zunehmenden Größe des in der Kartendatenspeichereinrichtung gespeicherten Kartenmaterials bzw. mit zunehmender Größe des anhand des Kartenmaterials beschriebenen geographischen Gebiets besteht beispielsweise die Möglichkeit, eine Routenberechnung vorzunehmen, die auch über Landes- und/oder Staatsgrenzen erfolgt, sowie eine Zielführung anhand einer derartigen Routenberechnung durchzuführen.

Gattungsgemäße Navigationssysteme, die über Kartendaten zu einem entsprechend großen geographischen Gebiet verfügen, sind zudem dazu eingerichtet, den Benutzer, in vielen Fällen den Führer eines Kraftfahrzeugs, mit Informationen zu versorgen, die vor oder bei einem Grenzübertritt in ein anderes Land bzw. einen anderen Staat, oder allgemein bei einem bevorstehenden Übertritt in ein abgeschlossenes geographisches Gebiet, für den Benutzer wichtig bzw. informativ sind. Bei derartigen Informationen handelt es sich beispielsweise um Vorschriften zum Straßenverkehr, die je nach Gesetzgebung in dem entsprechenden Land bzw. Staat unterschiedlich sein können.

Um dem Benutzer bei einem Grenzübertritt Informationen ausgeben zu können, sind in gattungsgemäßen Navigationssystemen so genannte Länderinformationen hinterlegt, die in verschiedenen Situationen an den Benutzer ausgegeben werden. Eine solche Situation ist beispielsweise dann gegeben, wenn sich das Navigationssystem einer Grenze zu einem anderen Land nähert bzw. wenn der Benutzer im Rahmen eines Zieleingabeprozesses ein Ziel in einem Land bestimmt, welches nicht dem Land der aktuellen Position des Navigationssystems entspricht.

Nachteilig an den bekannten Ansätzen zur Ausgabe von Länderinformationen ist dabei, dass die Länderinformationen statisch im Navigationssystem hinterlegt und dementsprechend in den voran genannten Situationen gleichermaßen statisch bzw. pauschal an den Benutzer ausgegeben werden. Dies hat unweigerlich zur Folge, dass entweder nur ein Mindestmaß an Länderinformation an den Benutzer ausgegeben wird, um diesen nicht zu verwirren bzw. zu überfordern und die Aufmerksamkeit des Benutzers nicht über Gebühr vom Verkehrsgeschehen abzulenken. Bei einer derart minimalisierten Ausgabe von Länderinformationen kann es jedoch dazu kommen, dass besonders wichtige Informationen für den Benutzer nicht enthalten sind, wodurch die Gefahr von Verstößen gegen Verkehrsregeln oder sogar Gefahrensituationen entstehen können.

Alternativ kann beim statischen Auslesen und Ausgeben von Länderinformationen bei bekannten Navigationssystemen ebenfalls vorgesehen sein, dass möglichst umfängliche Länderinformationen ausgegeben werden. Damit sind zwar mit hoher Wahrscheinlichkeit auch die für den Benutzer in der jeweiligen aktuellen Situation am meisten relevanten Informationen in den Länderinformationen enthalten, es wird jedoch, wie vorangegangen bereits angedeutet, in Kauf genommen, dass der Benutzer in erheblichem Maß vom Verkehrsgeschehen abgelenkt wird, um die jeweils für ihn informativen Angaben aus der Menge der Länderinformation zu entnehmen bzw. wahrzunehmen.

Zusammenfassend bestehen die Nachteile beim Betrieb bekannter Navigationssysteme im Hinblick auf die Ausgabe von Länderinformation darin, dass durch die statische Hinterlegung und dadurch bedingte unselektive Ausgabe der Länderinformationen keinerlei Anpassung an die Situation des Bedieners möglich ist und deshalb der individuelle Nutzen der Ausgabe von Länderinformationen für einen Bediener mitunter äußerst gering ausfallen kann.

Ausgehend von diesem Stand der Technik ist es deshalb Aufgabe der vorliegenden Erfindung, ein Verfahren zum Betrieb eines Navigationssystems vorzuschlagen, mit dem die Ausgabe von Länderinformationen optimal an die jeweilige Gesamtsituation des Bedieners angepasst und dadurch eine optimale Information des Bedieners ermöglicht wird.

Diese Aufgabe wird durch ein Verfahren nach der Lehre des Anspruchs 1 gelöst.

Vorteilhafte Ausführungsformen der Erfindung sind Gegenstand der Unteransprüche.

Das erfindungsgemäße Verfahren beruht dabei auf der Grundüberlegung, dass im Navigationssystem zumindest ein Benutzerprofil, welches zumindest eine Benutzereigenschaft umfasst, in einer Profildatenbank gespeichert und während des Betriebs des Navigationssytems zumindest ein gespeichertes Benutzerprofil als aktives Benutzerprofil bestimmt werden kann, wobei in einer Situation, in der die Ausgabe von Länderinformationen sinnvoll ist, wie beispielsweise bei der Annäherung an eine Grenze eines abgeschlossenen geographischen Gebiets, Verkehrs-und/oder Reiseinformationen bezüglich des abgeschlossenen geographischen Gebiets in Abhängigkeit des aktiven Benutzerprofils ausgefiltert und die bei der Ausfilterung als relevant für den Benutzer bzw. als relevant für das Benutzerprofil erachteten Verkehrs- und/oder Reiseinformationen ausgegeben werden.

Dabei ist vorgesehen, dass ein mit dem erfindungsgemäßen Verfahren betriebenes Navigationsystem eine Kartendatenspeichereinrichtung umfasst, in der Kartendaten eines geographischen Gebiets gespeichert sind und die Kartendaten auch Verkehrs- und/oder Reiseinformationen bezüglich abgeschlossener geographischer Gebiete umfassen. Zudem umfasst das Navigationssystem eine Positionsbestimmungseinrichtung, mit der die geographische Position des Navigationssystems bestimmt werden kann, eine Routenberechnungseinheit, mit der eine Bewegungsroute von einem Startpunkt zu einem Zielpunkt berechnet werden kann, sowie zumindest eine Eingabeeinheit, mit der Benutzereingaben getätigt werden können. Weiter ist vorgesehen, dass ein entsprechendes Navigationssystem eine Ausgabeeinheit aufweist, mit der Ausgaben an einen Benutzer ausgegeben werden können, sowie die bereits genannte Profildatenbank zur Speicherung von Benutzerprofilen.

Bei den Verkehrs- und/oder Reiseinformationen kann es sich um grundsätzlich beliebige Informationen handeln, die für die unterschiedlichen Benutzer und Benutzersituationen einen Informationsgehalt aufweisen und damit das Reisen bzw. Bewegen mit Unterstützung eines Navigationssystems erleichtern oder komfortabler gestalten.

Das erfindungsgemäße Verfahren sieht dabei in einem ersten Verfahrensschritt vor, dass die Bestimmung der aktuellen Position des Navigationssystems erfolgt. Dies kann mittels der Positionsbestimmungseinrichtung erfolgen, wobei die Positionsbestimmungseinrichtung beispielweise zum Empfang von GPS-Signalen sowie zu deren Verarbeitung und Interpretation eingerichtet sein kann. Alternativ kann die Positionsbestimmungseinrichtung jedoch auch zur Positionsbestimmung anhand anderer grundsätzlich bekannter Verfahren eingerichtet sein.

In einem zweiten Verfahrensschritt erfolgt anhand der Kartendaten der Kartendatenspeichereinrichtung und anhand der bestimmten aktuellen Position des Navigationssystems die Bestimmung des Abstands und/oder der Abstandsänderung zwischen der aktuellen Position des Navigationssystems und zumindest einer Grenze eines abgeschlossenen geographischen Gebiets. Dadurch kann festgelegt oder zumindest abgeschätzt werden, ob und wann ein Grenzübergang in ein anderes abgeschlossenes geographisches Gebiet bevorsteht oder wahrscheinlich ist. Dies gilt insbesondere auch dann, wenn keine Routenführung mittels des Navigationssystems von einem Startpunkt zu einem Zielpunkt erfolgt.

In einem darauf folgenden Verfahrensschritt des erfindungsgemäßen Verfahrens erfolgt das Ausfiltern von relevanten Verkehrs- und/oder Reiseinformationen bezüglich zumindest eines abgeschlossenen geographischen Gebiets in Abhängigkeit vom Abstand und/oder von der Abstandsänderung zwischen der aktuellen Position und zumindest einer Grenze von zumindest einem abgeschlossenen geographischen Gebiet und in Abhängigkeit vom jeweils aktiven Benutzerprofil. Damit wird sichergestellt, dass aus der Gesamtheit der in der Kartendatenspeichereinrichtung enthaltenen Reise- und/oder Verkehrsinformationen nur die Informationen ausgefiltert werden, die das abgeschlossene geographische Gebiet betreffen, in das ein Grenzübergang bevorsteht oder wahrscheinlich ist, wobei für das jeweilige abgeschlossene Gebiet nur diejenigen Verkehrs- und/oder Reiseinformationen ausgefiltert werden, die eine gewisse Relevanz für den Benutzer aufweisen. Die Relevanz für den Benutzer kann dabei durch einen Vergleich des Benutzerprofils bzw. der Benutzereigenschaften des Benutzerprofils mit den Verkehrs-und/oder Reiseinformationen der Kartendatenspeichereinrichtung erfolgen. Dazu kann in grundsätzlich bekannter Weise vorgesehen sein, dass auch den Verkehrs- und/oder Reiseinformationen einzelne Benutzerprofile und/oder Benutzereigenschaften zugeordnet sind oder gegebenenfalls ein relativer Übereinstimmungswert zugewiesen ist, womit der Vergleich und ein Ausfiltern anhand entsprechender Übereinstimmungskriterien ermöglicht werden.

In einem abschließenden Verfahrensschritt des erfindungsgemäßen Verfahrens erfolgt die Ausgabe der ausgefilterten Verkehrs- und/oder Reiseinformationen mit zumindest einer Ausgabeeinrichtung des Navigationssystems. Da die ausgegebenen Verkehrs- und/oder Reiseinformationen über das Benutzerprofil an die Benutzersituation angepasst und auf ein entsprechendes abgeschlossenes Gebiet reduziert sind, können dem Benutzer damit trotz eines Mindestmaßes an ausgegebenen Informationen ein Höchstmaß an für ihn bzw. für die aktuelle Benutzersituation relevanten Informationen ausgegeben werden. Dadurch wird wiederum eine schnelle intuitive und gefahrlose Aufnahme bzw. Interpretation der relevanten Verkehrs- und/oder Reiseinformationen durch den Benutzer gewährleistet.

Da sich Verkehrs- und/oder Reiseinformationen unterschiedlich schnell ändern, ist es besonders vorteilhaft für eine optimale Ausgabe von Verkehrs- und/oder Reiseinformationen, wenn neben den permanent in der Datenspeichereinrichtung hinterlegten Verkehrs- und/oder Reiseinformationen auch aktuelle oder zumindest aktualisierte Verkehrs-und/oder Reiseinformationen für eine entsprechende Ausgabe berücksichtigt werden können. Entsprechend sieht eine vorteilhafte Ausführungsform des erfindungsgemäßen Verfahrens vor, dass nach dem zweiten und vor dem dritten Verfahrensschritt weitere Verfahrensschritte vorgesehen sind, die im Allgemeinen eine Kommunikation zwischen dem Navigationssystem und einer externen, zentralen Datenverarbeitungseinrichtung zur Bestimmung und Übertragung weiterer situationsspezifischer Verkehrs- und/oder Reiseinformationen erlauben.

Im Einzelnen ist dabei vorgesehen, dass das Navigationssystem zumindest eine Kommunikationseinrichtung umfasst, mittels derer Daten mit einer externen, zentralen Datenverarbeitungseinrichtung austauschbar sind, wobei die Datenverarbeitungseinrichtung ihrerseits zur Verwaltung und Speicherung von Reise- und/oder Verkehrsinformationen bezüglich abgeschlossener Gebiete eingerichtet ist. Die zusätzlichen Verfahrensschritte sehen dabei vor, dass zunächst eine Datenanfrage vom Navigationssystem mittels der Kommunikationseinrichtung an die Datenverarbeitungseinrichtung gesendet wird, die zumindest eine Anfrageinformation umfasst. Die Anfrageinformation ist dabei vorgesehen, um eine möglichst spezifische Anfrage von Reise- und/oder Verkehrsinformationen zu erzeugen.

In einem weiteren Verfahrensschritt erfolgt seitens der Datenverarbeitungseinrichtung das Ausfiltern relevanter Reise- und/oder Verkehrsinformationen mittels eines Vergleichs der zumindest einen Anfrageinformation mit den Reise- und/oder Verkehrsinformationen der Datenverarbeitungseinrichtung. Wie schon bei den statisch im Navigationssystem vorgehaltenen Verkehrs- und/oder Reiseinformationen ist auch hier für einen entsprechenden Vergleich denkbar, dass die Verkehrs- und/oder Reiseinformationen der Datenverarbeitungseinrichtung Bestimmungs-und/oder Vergleichseigenschaften umfassen, mittels derer ein Vergleich und als Ergebnis des Vergleichs ein Ausfiltern von Reise- und/oder Verkehrsinformationen anhand der zumindest einen Anfrageinformation erfolgen kann.

In einem weiteren Verfahrensschritt ist vorgesehen, dass eine seitens der Datenverarbeitungseinrichtung erzeugte Datenantwort an das Navigationssystem übermittelt wird, wobei die Datenantwort relevante Verkehrs-und/oder Reiseinformationen umfasst, und wobei die empfangenen Daten der Datenantwort zur Ausfilterung und/oder zur Ausgabe relevanter Verkehrs- und/oder Reiseinformationen mittels des Navigationssystems verwendet werden.

Gemäß der vorangehend beschriebenen Ausführungsform des Verfahrens wird es demnach möglich, anhand der Anfrageinformationen ermittelte, zeitlich aktuelle Verkehrs- und/oder Reiseinformationen in die gesamte Ermittlung relevanter Verkehrs- und/oder Reiseinformationen einzubeziehen. Dementsprechend werden die schließlich ausgegebenen Verkehrs-und/oder Reiseinformationen noch besser an die jeweilige aktuelle Situation des Benutzers und die Situation in dem zumindest einen abgeschlossenen Gebiet angepasst.

Um die bei der Kommunikation zwischen dem Navigationssystem und der Datenverarbeitungseinrichtung ausgetauschten Daten in einem sinnvollen und praktikablen Rahmen zu halten, ist es besonders wünschenswert, wenn jeweils eine Datenübertragung erfolgt, die sich auf ein abgeschlossenes geographisches Gebiet bezieht, für das ein Grenzübertritt bevorsteht oder wahrscheinlich ist. Entsprechend sieht eine weitere Ausgestaltung des erfindungsgemäßen Verfahrens vor, dass die Datenanfrage in Abhängigkeit vom Abstand und/oder der Abstandsänderung zwischen der aktuellen Position des Navigationssytems und zumindest einer Grenze von zumindest einem abgeschlossenen geographischen Gebiet generiert wird und zumindest ein abgeschlossenes geographisches Gebiet in Form einer Anfrageinformation an die Datenverarbeitungseinrichtung gesendet wird. Dadurch wird beispielsweise ermöglicht, dass vor einem Grenzübergang in ein bestimmtes Land und in der Folge einer entsprechenden Datenanfrage an die Datenverarbeitungseinrichtung eine Datenantwort erzeugt wird, die aufgrund des Vergleichs der Anfrageinformation mit den Verkehrs- und/oder Reiseinformationen der Datenverarbeitungseinrichtung nur Verkehrs- und/oder Reiseinformationen bezüglich des abgeschlossenen geographischen Gebiets umfasst, welches anhand der Anfrageinformation identifiziert wurde.

Entsprechend kann vorgesehen sein, dass die in der Datenverarbeitungseinrichtung gespeicherten Reise- und Verkehrsinformationen zumindest einem abgeschlossenen geographischen Gebiete zugeordnet sein können und das Ausfiltern relevanter Reise- und Verkehrsinformationen in Abhängigkeit der empfangenen Anfrageinformationen erfolgt.

Zudem ist es besonders vorteilhaft, wenn bei der Kommunikation zwischen der externen, zentralen Datenverarbeitungseinrichtung und dem Navigationssystem Reise- und/oder Verkehrsinformationen übermittelt werden, die neben einer hohen Aktualität auch einen möglichst hohen Bezug zur Situation des Benutzers, insbesondere zur verkehrstechnischen Situation des Benutzers, aufweisen. Entsprechend ist gemäß einer weiteren Ausgestaltung des erfindungsgemäßen Verfahrens vorgesehen, dass mittels der Profilspeichereinrichtung des Navigationssystems standardisierte und/oder benutzerspezifische Benutzerprofile gespeichert werden können, wobei bei einer Datenanfrage an die zentrale Datenverarbeitungseinrichtung zumindest eine Benutzereigenschaft des jeweils aktiven Benutzerprofils oder das aktive Benutzerprofil in Form einer Anfrageinformation an die Datenverarbeitungseinrichtung gesendet wird. Um das Ausfiltern relevanter Reise- und/oder Verkehrsinformationen seitens der Datenverarbeitungseinrichtung, zugeschnitten auf die mittels der Anfrageinformation übermittelte Benutzereigenschaft und das übermittelte Benutzerprofil, zu ermöglichen, kann wiederum vorgesehen sein, dass die seitens der Datenverarbeitungseinrichtung verwalteten Reise-und/oder Verkehrsinformationen über Attribute bzw. Eigenschaften verfügen, die einen Vergleich bzw. eine Übereinstimmungsermittlung mit Benutzereigenschaften bzw. Benutzerprofilen erlauben.

Gemäß dieser Ausgestaltung des Verfahrens wird ermöglicht, dass die von der Datenverarbeitungseinrichtung mittels der Datenantwort an das Navigationssystem übermittelten Daten neben einer hohen zeitlichen Aktualität auch eine hohe Relevanz bezüglich des Benutzerprofils und damit bezüglich der Situation des Benutzers aufweisen. Dadurch können für die jeweilige Situation optimal zugeschnittene Reise- und/oder Verkehrsinformationen an den Benutzer ausgegeben werden. Beispielsweise können sehr unterschiedliche aktuelle Verkehrs- und/oder Reiseinformationen für ein abgeschlossenes Gebiet für einen PKW-Fahrer oder einen Motorradfahrer informativ sein.

Weiter ist es wünschenswert, die von einer externen, zentralen Datenverarbeitungseinrichtung per Datenantwort zurückerhaltenen Reise-und/oder Verkehrsinformationen derart zu beschränken, dass sie möglichst aktuell und gleichzeitig möglichst auf ein geographisches Teilgebiet des abgeschlossenen geographischen Gebiets beschränkt sind. Das geographische Teilgebiet ist dabei besonders bevorzugt ein solches geographisches Gebiet, durch das der Benutzer sich im Folgenden bewegen wird. Entsprechend sieht eine Ausführung des Verfahrens vor, dass bei einer Datenanfrage zumindest ein Teil einer berechneten Bewegungsroute innerhalb zumindest eines abgeschlossenen geographischen Gebiets in Form einer Anfrageinformation an die Datenverarbeitungseinrichtung gesendet wird. Bei der berechneten Bewegungsroute kann es sich sowohl um eine Bewegungsroute handeln, die aufgrund eines bestimmten Startpunkts und eines bestimmten Zielpunkts berechnet wurde, als auch um eine Bewegungsroute, die automatisch vom Navigationssystem als wahrscheinlichste Bewegungsroute berechnet wurde.

Weiter ist es besonders vorteilhaft, wenn in der Datenverarbeitungseinrichtung gespeicherte Reise- und/oder Verkehrsinformationen einem geographischen Teilgebiet eines abgeschlossenen geographischen Gebiets zugeordnet sein können und das Ausfiltern relevanter Reise-und/oder Verkehrsinformationen in Abhängigkeit der empfangenen Anfrageinformation erfolgt. Damit können seitens der Datenverarbeitungseinrichtung Reise- und/oder Verkehrsinformationen ausgefiltert werden und als Datenantwort an das Navigationssystem gesendet werden, die sich bei der entsprechenden Anfrageinformation ganz speziell und selektiv auf ein wahrscheinlich oder tatsächlich in der Zukunft zu durchquerendes Teilgebiet eines geographisch abgeschlossenen Gebiets beziehen. Beispielsweise können dadurch Informationen zu Wetterbedingungen in zumindest einem Teilgebiet eines abgeschlossenen geographischen Gebiets oder Kraftstoffpreise in einem Teilgebiet eines abgeschlossenen geographischen Gebiets selektiv auf die jeweilige Anfrageinformation des Navigationssystems ausgefiltert und wiederum an dieses per Datenantwort zurückgesendet werden.

Bei der Kommunikation zwischen dem Navigationssystem und der externen, zentralen Datenverarbeitungseinrichtung sollen zudem redundante Informationsübertragungen möglichst vermieden werden. Entsprechend sieht eine vorteilhafte Ausführung des erfindungsgemäßen Verfahrens vor, dass bei einer Datenanfrage der Zeitpunkt der letzten Datenanfrage von Verkehrs- und/oder Reiseinformationen bezüglich des jeweiligen zumindest einen abgeschlossenen geographischen Gebiets in Form einer Anfrageinformation an die Datenverarbeitungseinrichtung gesendet wird. Dazu kann beispielsweise vorgesehen sein, dass die Datenanfragen oder zumindest ein Teil der Datenanfragen seitens des Navigationssystems gespeichert werden.

Um ein möglichst effektives Ausfiltern relevanter Reise- und/oder Verkehrsinformationen seitens der externen, zentralen Datenverarbeitungseinrichtung zu gewährleisten, sieht eine vorteilhafte Ausführungsform des Verfahrens vor, dass den in der Datenverarbeitungseinrichtung gespeicherten Reise- und/oder Verkehrsinformationen ein Erstellungs-und/oder Ablaufszeitpunkt zugeordnet sein kann und das Ausfiltern relevanter Reise- und Verkehrsinformationen in Abhängigkeit der empfangenen Anfrageinformation erfolgt. Dementsprechend können beim Ausfiltern relevanter Reise- und/oder Verkehrsinformationen bei der Übermittlung entsprechender Anfrageinformationen diejenigen Reise-und/oder Verkehrsinformationen ausgefiltert werden, die sich seit der letzten Anfrage verändert haben oder seit der letzten Anfrage neu erstellt wurden oder nach der letzten Anfrage ungültig wurden.

Da die mittels einer Datenantwort empfangenen Verkehrs- und/oder Reiseinformationen unterschiedliche zeitliche Gültigkeiten oder Relevanzen aufweisen können, ist es insbesondere wünschenswert, wenn die empfangenen Reise- und/oder Verkehrsinformationen zumindest eine begrenzte Zeit lang auf dem Navigationssystem vorgehalten werden. Entsprechend sieht eine Ausführungsform vor, dass die mit einer Datenantwort von der Datenverarbeitungseinrichtung empfangenen Verkehrs-und/oder Reiseinformationen in einer Speichereinrichtung des Navigationssystems gespeichert werden, wobei mit den Verkehrs- und/oder Reiseinformationen auch der Zeitpunkt des Empfangs der Datenantwort gespeichert wird. Damit kann eine unnötig häufige Erzeugung von Datenanfragen an die Datenverarbeitungseinrichtung unterbunden werden. Zudem kann dadurch auch ein Vergleich bereits gespeicherter Verkehrs- und/oder Reiseinformationen mit neu erhaltenen Verkehrs-und/oder Reiseinformationen bezüglich der Gültigkeit bzw. höheren Aktualität erfolgen.

Zudem sieht eine vorteilhafte Ausgestaltung des Verfahrens vor, dass die mit einer Datenantwort von der Datenverarbeitungseinrichtung empfangenen Verkehrs- und/oder Reiseinformationen in Abhängigkeit von der Art der Verkehrs- und/oder Reiseinformationen mit einem Gültigkeitszeitraum im Navigationssystem gespeichert werden. Dadurch können ebenfalls die seitens des Navigationssystems vorgehaltenen Verkehrs-und/oder Reiseinformationen auf einem möglichst aktuellen Stand gehalten werden, und zudem überflüssige Datenanfragen an die Datenverarbeitungseinrichtung reduziert werden oder ganz unterbleiben.

Schließlich sieht eine weitere vorteilhafte Ausprägung des erfindungsgemäßen Verfahrens vor, dass mit der von der Datenverarbeitungseinrichtung empfangenen Datenantwort auch Daten zu Waren und Diensten übermittelt werden, wobei mittels der Daten der Datenantwort die Waren und Dienste über das Navigationssystem angeboten und/oder ausgeführt werden können. Dabei kann es sich sowohl um unentgeltliche als auch kostenpflichtige Waren und Dienste bzw. deren Angebote handeln. Bei kostenpflichtigen Waren und Diensten ist zudem vorgesehen, dass auch die Abwicklung der Zahlung seitens des Navigationssystems und/oder damit verbundenen Peripheriegeräten erfolgen kann.

Abgesehen von der Ermittlung und Ausgabe relevanter Reise- und/oder Verkehrsinformationen bei der Annäherung bzw. Überschreitung von Grenzen abgeschlossener geographischer Gebiete kann es ebenfalls wünschenswert sein, entsprechend aktuelle und auf die Situation des Benutzers zugeschnittenen Reise- und/oder Verkehrsinformationen zu ermitteln und auszugeben, wenn der Benutzer beispielsweise im Rahmen eines Zieleingabeprozesses einen Zielpunkt eingibt, der in einem anderen abgeschlossenen geographische Gebiet liegt als die aktuelle Position des Navigationssystems. Entsprechend sieht eine Ausführungsform des Verfahrens vor, dass das Ausfiltern und Anzeigen relevanter Reise- und Verkehrsinformationen seitens des Navigationssystems und/oder das Senden einer Datenanfrage an eine externe, zentrale Datenverarbeitungseinrichtung auch auf das Bestimmen eines Zielpunkts einer Route und das Bestimmen von Grenzen abgeschlossener geographischer Gebiete zwischen dem Zielpunkt der Route und der aktuellen Position des Navigationssystems erfolgen kann.

Im Folgenden wird die Erfindung anhand schematischer Zeichnungen, welche lediglich Ausführungsbeispiel zeigen, näher erläutert.

Es zeigen:
- Fig. 1: eine schematische Darstellung der Ausgabe von Länderinformationen auf einer Ausgabeeinheit eines Navigationssystems gemäß des Stands der Technik;
- Fig. 2: eine schematische Darstellung der Ausgabe von relevanten Verkehrs- und/oder Reiseinformationen auf einer Ausgabeeinheit eines Navigationssystems gemäß einer ersten Ausführungsform des erfindungsgemäßen Verfahrens;
- Fig. 3: eine schematische Darstellung der Ausgabe von relevanten Verkehrs- und/oder Reiseinformationen auf einer Ausgabeeinheit eines Navigationssystems gemäß einer zweiten Ausführungsform des erfindungsgemäßen Verfahrens;
- Fig. 4: eine schematische Darstellung der Ausgabe von relevanten Verkehrs- und/oder Reiseinformationen auf einer Ausgabeeinheit eines Navigationssystems gemäß einer dritten Ausführungsform des erfindungsgemäßen Verfahrens;
- Fig. 5: eine schematische Darstellung der Ausgabe von relevanten Verkehrs- und/oder Reiseinformationen auf einer Ausgabeeinheit eines Navigationssystems gemäß einer vierten Ausführungsform des erfindungsgemäßen Verfahrens;
- Fig. 6: eine schematische Darstellung der Ausgabe von relevanten Verkehrs- und/oder Reiseinformationen auf einer Ausgabeeinheit eines Navigationssystems gemäß einer fünften Ausführungsform des erfindungsgemäßen Verfahrens;
- Fig. 7: eine schematische Darstellung der Ausgabe von relevanten Verkehrs- und/oder Reiseinformationen auf einer Ausgabeeinheit eines Navigationssystems gemäß einer sechsten Ausführungsform des erfindungsgemäßen Verfahrens;
- Fig. 8: eine schematische Darstellung der Ausgabe von relevanten Verkehrs- und/oder Reiseinformationen auf einer Ausgabeeinheit eines Navigationssystems gemäß einer siebten Ausführungsform des erfindungsgemäßen Verfahrens;
- Fig. 9: einen beispielhaften Ablaufplan für die Kommunikation zwischen einem Navigationssystem und einer externen, zentralen Datenverarbeitungseinrichtung gemäß einer Ausführungsform des erfindungsgemäßen Verfahrens.

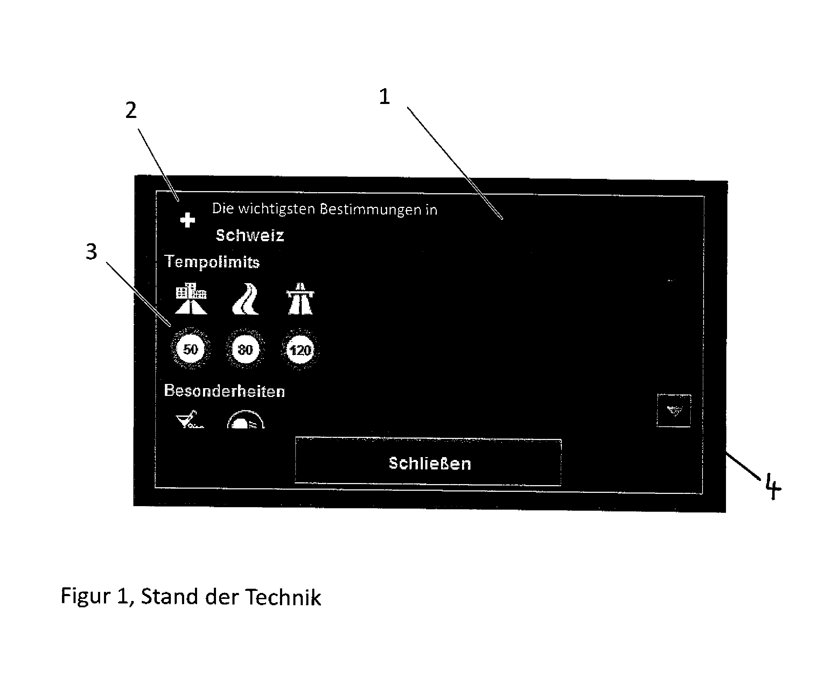

Fig. 1 zeigt schematisiert die Ausgabe von Länderinformationen nach dem bekannten Stand der Technik. Dabei erfolgt auf einer graphischen Ausgabeeinheit 1 die Ausgabe von Länderinformationen 3 für ein bestimmtes abgeschlossenes geographisches Gebiet 2. Die Ausgabe der Fig. 1 sowie die vorangegangene Auswahl der entsprechenden Reise-und/oder Verkehrsinformationen aus der Kartendatenspeichereinrichtung erfolgt dabei, wenn sich das Navigationssystem der Grenze für das abgeschlossene geographische Gebiet 2 nähert, eine Grenze überschreitet oder im Rahmen eines Zieleingabeprozesses ein Ziel eingegeben wird, welches im abgeschossenen geographischen Gebiet 2 liegt und die aktuelle Position des Navigationssystems nicht in dem abgeschlossenen geographischen Gebiet 2 liegt. Wie aus der Fig. 1 sichtbar wird, sind für das abgeschlossene geographische Gebiet 2 eine Vielzahl von Länderinformationen 3 in der Kartendatenspeichereinrichtung des Navigationssystems vorrätig. Entsprechend viele Reise- und/oder Verkehrsinformationen umfasst die Ausgabe, was sie für den Benutzer wenig intuitiv bzw. nur schlecht wahrnehmbar macht. Der Benutzer kann zwar über die Eingabeeinheit 4 im rechten Bereich der Ausgabeeinheit 1 jeweils die Auswahl der über die Ausgabeeinheit 1 auszugebende Länderinformation 3 selektiv verändern, muss jedoch gleichzeitig die für sich bzw. in seiner Situation relevanten Verkehrs- und/oder Reiseinformationen selbstständig identifizieren und interpretieren.

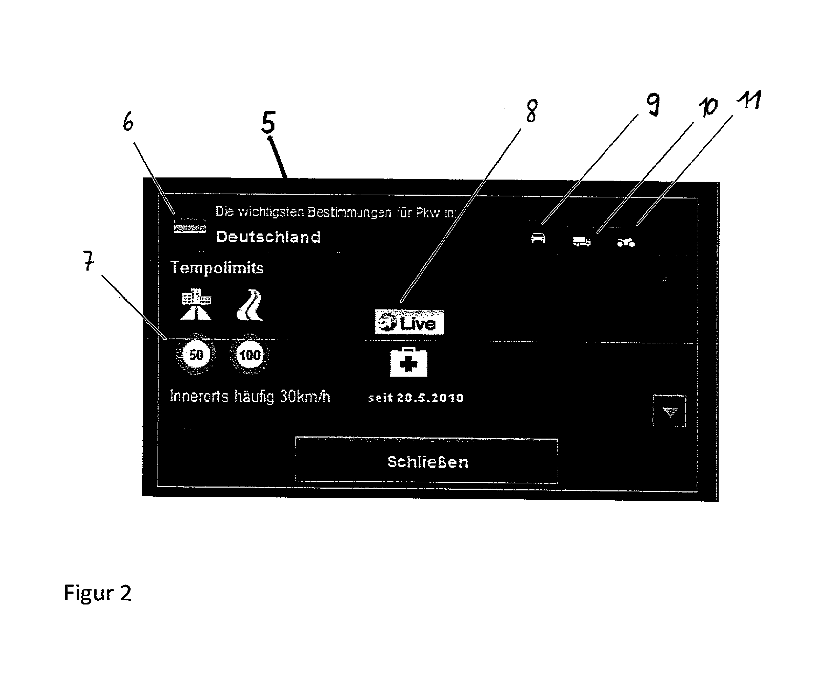

Fig. 2 zeigt ebenfalls die Ausgabeeinheit 5 eines Navigationssystems. Jedoch sind in Fig. 2 die ausgegebenen relevanten Reise- und/oder Verkehrssituationen 7 für das abgeschlossene geographische Gebiet 6 anhand eines Benutzerprofils sowie durch eine Kommunikation zwischen dem Navigationssystem und einer externen, zentralen Datenverarbeitungseinrichtung ermittelt bzw. ausgefiltert worden. Die Profilausgabeelemente 9, 10 und 11 symbolisieren in der Ausgabe der Fig. 2 die in der Profilspeichereinrichtung des Navigationssystems hinterlegten Benutzerprofile. Dabei kann es sich beispielsweise um vordefinierte Benutzerprofile, wie beispielsweise Pkw, Lkw oder Motorrad, handeln. Über die Ausgabeelemente der Benutzerprofile 9 bis 11 kann beispielsweise bei der Ausgestaltung der Ausgabeeinheit 5 das Navigationssystem als kombinierte Ein- und Ausgabeeinheit in Form eines Touchscreens jeweils eines der Benutzerprofile als aktives Benutzerprofil ausgewählt und/oder eines der Benutzerprofile bezüglich zumindest einer Benutzereigenschaft geändert und gespeichert werden.

Der Ausgabeinhalt 8 der Ausgabeeinheit 5 deutet zudem daraufhin, dass die ausgefilterten und ausgegebenen Reise- und/oder Verkehrsinformationen 7 nicht nur aus den statisch in der Kartendatenspeichereinrichtung hinterlegten Reise- und/oder Verkehrsinformationen des abgeschlossenen geographischen Gebiets stammen, sondern auch eine Kommunikation zwischen dem Navigationssystem und einer zentralen, externen Datenverarbeitungseinrichtung stattgefunden hat. Dabei ist vorgesehen, dass eine Datenanfrage an die Datenverarbeitungseinrichtung gesendet wird, die im Fall der Fig. 2 beispielsweise das aktive Benutzerprofil, also das Profil "Pkw" sowie das abgeschlossene geographische Gebiet 6 als Anfrageinformation enthält. Daraufhin wird seitens der von der Datenverarbeitungseinrichtung verwalteten Reise- und/oder Verkehrsinformationen ein Vergleich mit den Anfrageinformationen der Datenanfrage ausgeführt, wobei im Fall der Fig. 2 die Reise- und/oder Verkehrsinformationen seitens der Datenverarbeitungseinrichtung mit derartigen Attributen und/oder Eigenschaften versehen sind, dass ein entsprechender Vergleich ein Maß an Übereinstimmung liefert, anhand dessen relevante Reise- und/oder Verkehrsinformationen seitens der Datenverarbeitungseinrichtung ausgefiltert und mittels einer Datenantwort an das Navigationssystem übertragen werden. Dabei kann vorgesehen sein, dass die per Datenantwort empfangenen Verkehrs- und/oder Reiseinformationen die statischen Verkehrs- und/oder Reiseinformationen ersetzen oder ergänzen.

Bezüglich der Benutzerprofile der Profildatenbank kann neben einer vorgegebenen Anzahl von Standardprofilen und/oder vom Benutzer spezifisch erzeugter Benutzerprofile auch vorgesehen sein, dass das Navigationssystem dazu eingerichtet ist, selbstständig ein Benutzerprofil oder zumindest Benutzereigenschaften aktuell zu ermitteln und in Form eines Benutzerprofils zu speichern.

Aus der Gesamtheit der Reise- und/oder Verkehrsinformationen, die seitens des Navigationssystems in der Kartendatenspeichereinrichtung permanent und statisch vorliegen, und der mittels der Datenantwort empfangenen Reise- und/oder Verkehrsinformationen werden daraufhin die relevanten Reise- und/oder Verkehrsinformationen ausgefiltert und, wie in Fig. 2 dargestellt, an den Benutzer ausgegeben.

Zur Kommunikation zwischen dem Navigationssystem und der Datenverarbeitungseinrichtung kann alternativ zu einer vom Navigationssystem umfassten Kommunikationseinrichtung auch eine Verbindung zwischen dem Navigationssystem und einer externen Kommunikationseinrichtung, wie beispielsweise einem Mobilfunkgerät, vorgesehen sein. Die Verbindung kann dabei gegebenenfalls über Kurzstreckenfunk oder eine Kabelverbindung hergestellt werden.

Auch der Zeitpunkt, zu dem eine Datenanfrage an die zentrale Datenverarbeitungseinrichtung gesendet wird, kann von der folgenden Ausgabe der Verkehrs- und/oder Reiseinformationen getrennt werden. Dies ermöglicht ein rechtzeitiges Empfangen der Datenantwort, das Reduzieren von Kosten für die Datenübermittlung und ermöglicht, die empfangenen Verkehrs- und/oder Reiseinformationen zu einem besonders vorteilhaften Zeitpunkt auszugeben.

Bei den mittels der Datenantwort empfangenen Verkehrs- und/oder Reiseinformationen kann es sich in Abhängigkeit der Datenanfrage beispielsweise auch um Währungskurse, aktuelle Nachrichten, Veranstaltungen, Feiertage, Schulferien, Wetteraussichten, spezielle Fahrverbote, gesperrte Streckenabschnitte, jahreszeitabhängige Geschwindigkeitsbegrenzungen, Kraftstoffpreise und/oder freie Rast- und Ruheplätze handeln.

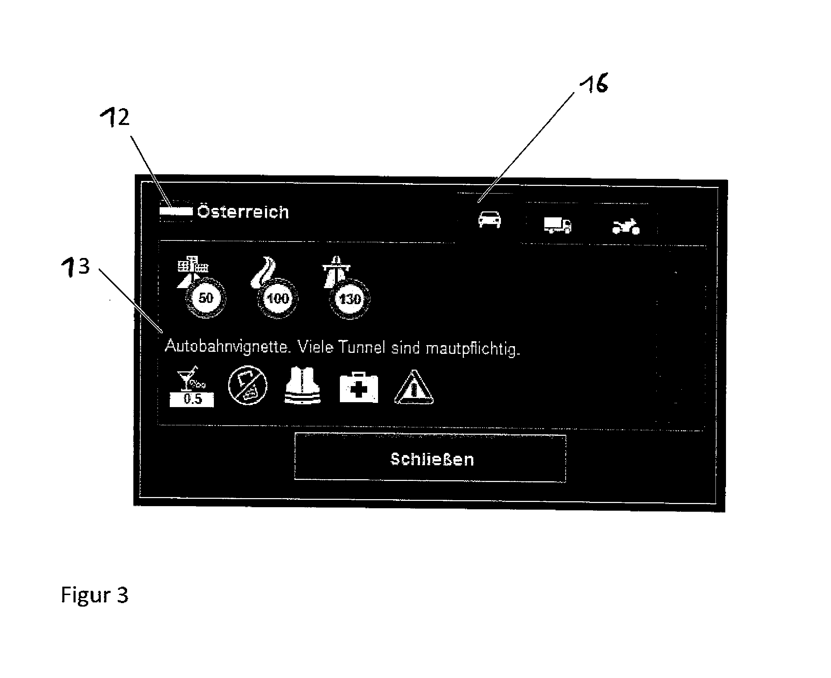

Anhand der Fign. 3 bis 5 soll noch einmal der Unterschied der Ausgabe von Reise- und/oder Verkehrsinformationen 13 bis 15 für unterschiedliche aktivierte Benutzerprofile im jeweils identischen abgeschlossenen geographischen Gebiet 12 verdeutlicht werden. Im Fall der Fig. 3 ist das Benutzerprofil "Pkw" aktiviert, was durch das Ausgabeelement 16 angezeigt wird. Entsprechend enthalten die Reise- und/oder Verkehrsinformationen 13 auch Informationen, die speziell auf das Führen eines Pkws zugeschnitten sind. Beispielsweise ist die Pflicht zum Mitführen einer Warnweste sowie eines Warndreiecks, wie sie im abgeschlossenen geographischen Gebiet 12 für Pkws vorgeschrieben ist, Teil der Reise-und/oder Verkehrsinformation 13.

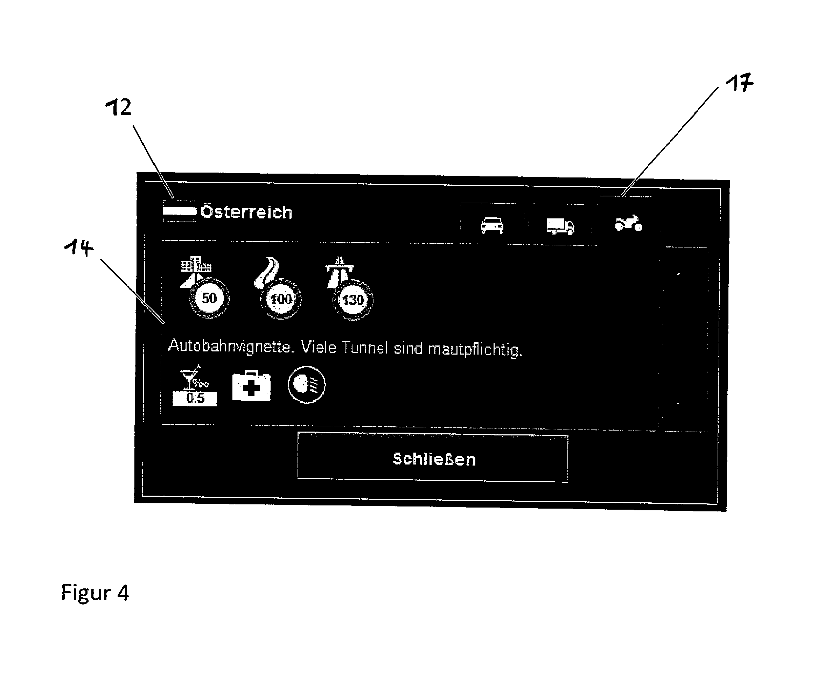

Demgegenüber ist in der Situation der Fig. 4 das Profil "Motorrad" aktiviert, was durch das Ausgabeelement 17 angezeigt wird. Da für einen Motorradfahrer im Vergleich zur Situation der Fig. 3 im abgeschlossenen geographischen Gebiet 12 das Mitführen einer Warnweste sowie eines Warndreiecks nicht vorgeschrieben ist, werden beim Ausfiltern der relevanten Reise- und/oder Verkehrsinformationen bezüglich des Benutzerprofils "Motorrad" diese nicht ausgefiltert und ebenfalls nicht ausgegeben. Dementsprechend können für den Motorradfahrer, wie in Fig. 4 dargestellt, unnötige oder wenig informative Ausgaben von Reise-und/oder Verkehrsinformationen unterbleiben.

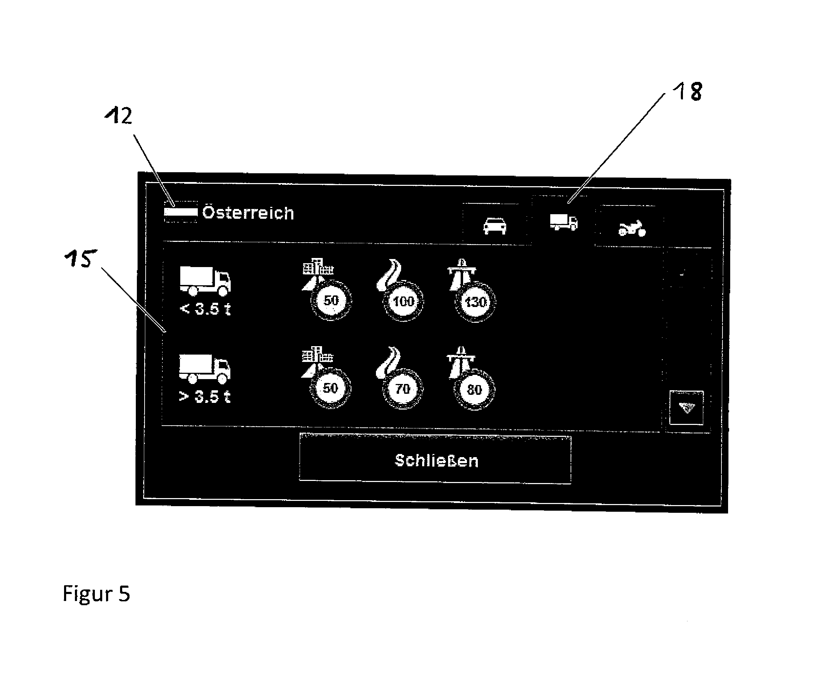

Wie in Fig. 5 dargestellt, fällt die Ausgabe von Reise- und/oder Verkehrsinformationen 15 für das abgeschlossene geographische Gebiet 12 ebenfalls anders gegenüber den Fign. 3 und 4 aus, wenn beispielsweise ein "Lkw"-Profil als aktives Benutzerprofil ausgewählt ist. In Fig. 5 ist das ausgewählte "Lkw"-Profil ein standardisiertes Lkw-Profil, weshalb die relevanten Reise- und/oder Verkehrsinformationen 15 Informationen über Lkws mit unterschiedlichem Gesamtgewicht umfassen. Gleichermaßen wäre es jedoch denkbar, dass der Benutzer das aktivierte Benutzerprofil "Lkw" derart geändert bzw. konkretisiert hat, dass eine weiterführende Ausfilterung relevanter Reise- und/oder Verkehrsinformationen, auch bezüglich eines Gesamtgewichts, erfolgen kann. Dadurch können die ausgegebenen Reise- und/oder Verkehrsinformationen noch besser an die jeweilige Benutzersituation angepasst und entsprechend übersichtlich und intuitiv ausgegeben werden.

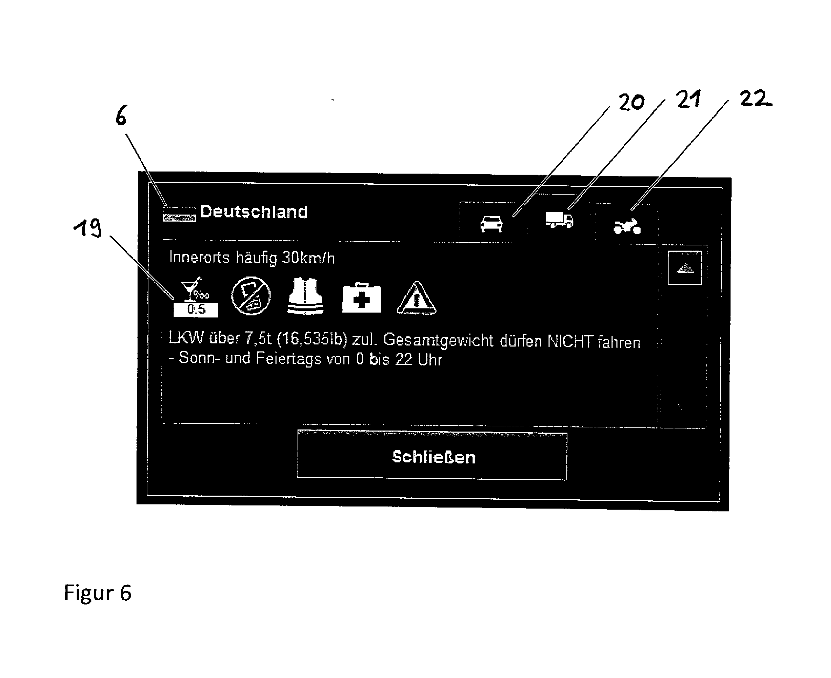

In Fig. 6 sind für das abgeschlossene geographische Gebiet 6 zudem weitere relevante Verkehrs- und/oder Reiseinformationen für das aktivierte Benutzerprofil "Lkw" dargestellt. Über die Ausgabeelemente 20 bis 22 ist auch in der Ausgabe der Fig. 6 ersichtlich, dass das Benutzerprofil "Lkw" aktiviert ist. Auch hier ist erkennbar, dass zumindest ein Teil der ausgegebenen Reise- und/oder Verkehrsinformationen 19 für einen Benutzer, der sich in einem Pkw oder mit einem Motorrad fortbewegt, wenig bis keine Relevanz aufweist. Dementsprechend kann über die selektive Ausfilterung der auszugebenden Reise- und/oder Verkehrsinformationen anhand des aktivierten Benutzerprofils eine deutlich verbesserte Ausgabe von Reise- und/oder Verkehrsinformationen erreicht werden.

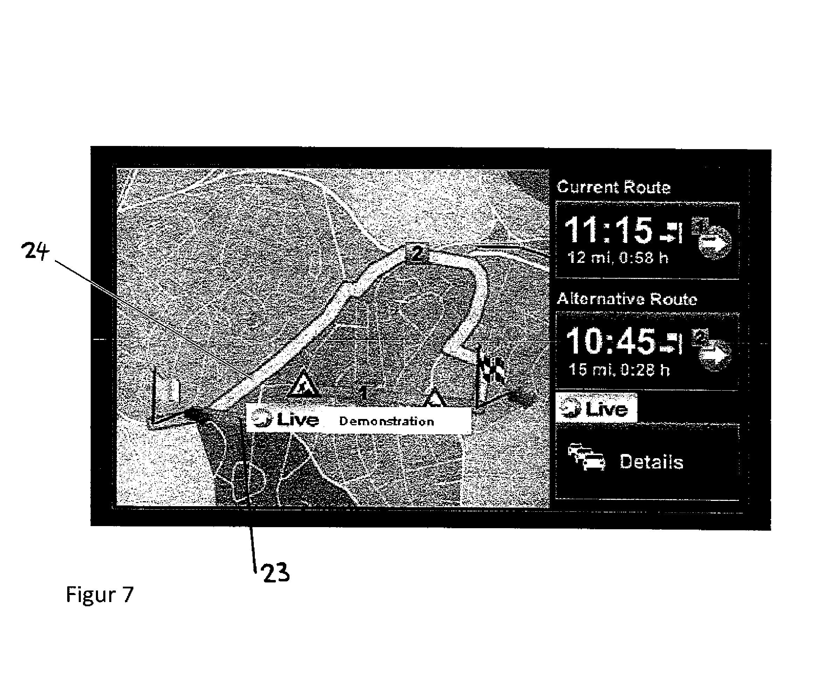

In Fig. 7 wird eine Situation dargestellt, in der mittels einer Datenanfrage an eine externe, zentrale Datenverarbeitungseinrichtung neben einem aktivierten Benutzerprofil und einem abgeschlossenen geographischen Gebiet auch ein Teilgebiet anhand einer berechneten Bewegungsroute 23 in Form von Anfrageinformationen an die externe Datenverarbeitungseinrichtung übermittelt wurde. Anhand der Anfrageinformationen kann die Datenverarbeitungseinrichtung relevante Reise- und/oder Verkehrsinformationen identifiziert bzw. ausfiltern. In der Situation der Fig. 7 ergibt der Vergleich der Anfrageinformation mit den in der Datenverarbeitungseinrichtung verwalteten Reise- und/oder Verkehrsinformationen, dass auf einem Teil der Route 23 für den Tag der Befahrung eine Demonstration angekündigt ist und dementsprechend mit Verkehrsbehinderungen zu rechnen ist.

Die entsprechend ausgefilterten Reise- und/oder Verkehrsinformationen werden mittels einer Datenantwort an das Navigationssystem übermittelt und dort zumindest zeitweise gespeichert. In einer vorteilhaften Ausführungsform des erfindungsgemäßen Verfahrens kann dabei vorgesehen sein, dass empfangene Reise- und/oder Verkehrsinformationen, die auf eine Verkehrsstörung in einem geographischen Teilgebiet hinweisen, welches aufgrund einer berechneten Bewegungsroute als Anfrageinformation einer Datenanfrage an eine externe Datenverarbeitungseinrichtung gesendet wurde, dazu führt, dass vom Navigationssystem automatisch eine Neuberechnung der Bewegungsroute ausgelöst wird, die das geographische Teilgebiet der ursprünglichen Route 23 meidet.

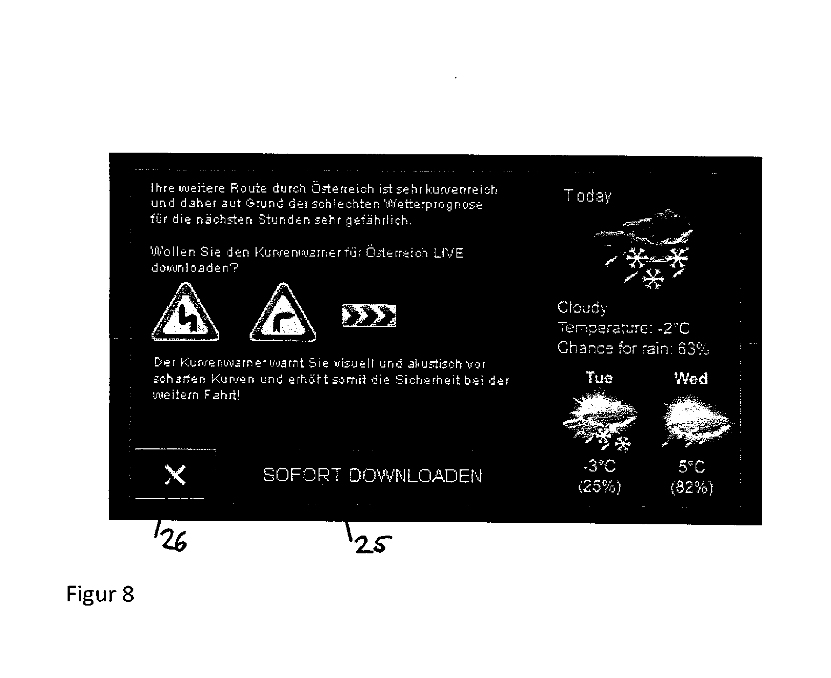

In Fig. 8 ist eine Situation dargestellt, in der eine Datenanfrage an die externe Datenverarbeitungseinrichtung und eine darauffolgende Ausfilterung von relevanten Reise- und/oder Verkehrsinformationen seitens der Datenverarbeitungseinrichtung zu dem Ergebnis geführt hat, dass die berechnete Route in einem abgeschlossenen geographischen Gebiet durch ein geographisches Teilgebiet verläuft, welches kurvenreich ist. Zudem hat das Ausfiltern aktueller relevanter Reise- und/oder Verkehrsinformationen zu der Ausfilterung von Informationen bezüglich des Reisewetters geführt. Aufgrund des kurvenreichen Streckenverlaufs der Bewegungsroute und dem ermittelten Reisewetter filtert die Datenverarbeitungseinrichtung zudem Daten zu einem Dienst aus und sendet diese zusammen mit den Reise- und/oder Verkehrsinformationen in Form einer Datenantwort an das Navigationssystem.

Im Fall der Fig. 8 handelt es sich bei den Daten zu dem ausgefilterten Dienst um einen Kurvenwarner. Dabei sind die übertragenen Daten ausreichend, um den Dienst seitens des Navigationssystems auszuführen. Dabei erhält der Benutzer über die Eingabeeinheit 25 die Möglichkeit, den Dienst auszuführen oder ihn über die Eingabeeinheit 26 abzulehnen. Je nachdem, ob es sich bei dem Dienst des Kurvenwarners in der Situation der Fig. 8 um einen kostenpflichtigen oder kostenfreien Dienst handelt, kann vorgesehen sein, dass die Abwicklung der Bezahlung ebenfalls über das Navigationssystem oder über mit dem Navigationssystem verbundene Peripheriegeräte abgewickelt wird.

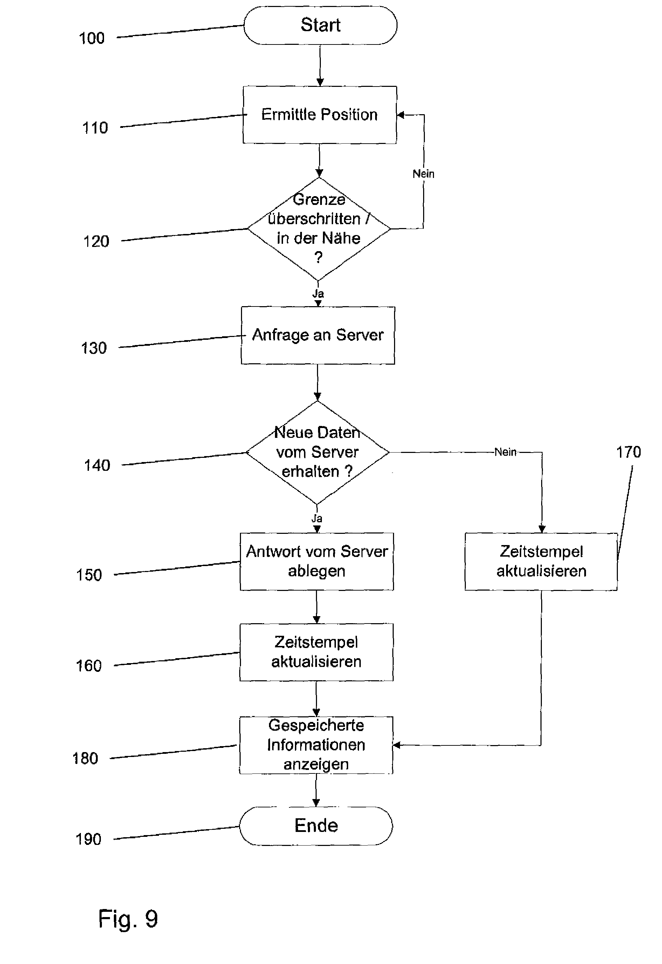

Fig. 9 zeigt einen Ablaufplan einer Ausführungsform des erfindungsgemäßen Verfahrens. Das Verfahren wird zunächst im Verfahrensschritt 100 gestartet. Als Nächstes erfolgt die Bestimmung der aktuellen Position des Navigationssystems im Verfahrensschritt 110. Im Verfahrensschritt 120 wird anhand des Abstands zu einer Grenze oder anhand der Abstandsänderung zu einer Grenze eines abgeschlossenen geographischen Gebiets ermittelt, ob sich das Navigationssystem einer Grenze nähert oder eine Grenze bereits überschritten hat. Ist dies nicht der Fall, so wird das Verfahren mit dem Verfahrensschritt 110 weitergeführt. Wird jedoch eine Annäherung bzw. ein Überschreiten einer Grenze eines abgeschlossenen geographischen Gebiets festgestellt, so wird eine Datenanfrage an eine externe, zentrale Datenverarbeitungseinrichtung generiert und gesendet. Die Anfrageinformation der Datenanfrage kann dabei beispielsweise den Anfragezeitpunkt, Benutzereigenschaften oder ein Benutzerprofil enthalten. Zudem enthält die Datenanfrage das abgeschlossene geographische Gebiet, an das eine Annäherung bzw. für das eine Grenzüberschreitung im Schritt 120 festgestellt wurde.

Weiter können Anfrageinformationen beispielsweise im letzten Zeitpunkt einer Anfrage bezüglich des abgeschlossenen geographischen Gebiets bestehen. Auch ein geographisches Teilgebiet des abgeschlossenen geographischen Gebiets kann in Form von Anfrageinformation Teil der Datenanfrage sein. Nach dem Erzeugen und Senden der Datenanfrage im Verfahrensschritt 130 wird seitens des Navigationssystems auf eine Datenantwort von der Datenverarbeitungseinrichtung gewartet.

Die Ausfilterung relevanter Reise- und/oder Verkehrsdaten seitens der Datenverarbeitungseinrichtung ist im Ablaufplan der Fig. 9 aus Gründen der Übersichtlichkeit nicht dargestellt. Auch das Ausfiltern von relevanten Verkehrs- und/oder Reiseinformationen anhand der statischen, in der Kartendatenspeichereinrichtung hinterlegten Reise- und/oder Verkehrsinformationen ist in Fig. 9 nicht dargestellt.

Erhält das Navigationssystem auf die Datenanfrage keine Datenantwort, so wird festgestellt, dass alle für das entsprechende abgeschlossene geographische Gebiet bereits vorhandenen bzw. gespeicherten Reise-und/oder Verkehrsinformationen nach wie vor gültig sind und keine weiteren Reise- und/oder Verkehrsinformationen für die gestellte Datenanfrage von Relevanz waren. Daraufhin wird in Verfahrensschritt 170 der mit den bereits gespeicherten Reise- und/oder Verkehrsinformationen für das entsprechende abgeschlossene geographische Gebiet gespeichert Aktualitätszeitpunkt bzw. Abfragezeitpunkt und/oder Ablaufzeitpunkt aktualisiert und in Verfahrensschritt 180 werden die gespeicherten Reise- und/oder Verkehrsinformationen ausgefiltert und angezeigt.

Erhält das Navigationssystem auf die Datenanfrage eine Datenantwort, so werden diese Daten im Verfahrensschritt 150 auf einer Speichereinrichtung des Navigationssystems gespeichert und im Verfahrensschritt 160 für die empfangenen Reise- und/oder Verkehrsinformationen ein Empfangszeitpunkt, Gültigkeitszeitraum und/oder Ablaufzeitpunkt hinterlegt bzw. gespeichert. Anhand dieses Wertes bzw. dieser Werte können im Folgenden Gültigkeit- bzw. Priorisierungskonflikte zugunsten der jeweils jüngeren und damit aktuelleren Reise- und/oder Verkehrsinformationen entschieden werden. Im darauf folgenden Verfahrensschritt 180 werden ebenfalls die gespeicherten Reise- und/oder Verkehrsinformationen ausgefiltert und an den Benutzer ausgegeben. Daraufhin wird das Verfahren im Verfahrensschritt 190 beendet.

## Patentansprüche

1. Verfahren zum Betrieb eines Navigationssystems, umfassend eine Kartendatenspeicheeinrichtung, in der Kartendaten eines geographischen Gebietens gespeichert sind, wobei die Kartendaten auch Verkehrs- und/oder Reiseinformationen (7, 13, 14, 15, 19) bezüglich abgeschlossener geographischer Gebiete (2, 6, 12) umfassen, zumindest eine Positionsbestimmungseinrichtung, mit der die geographische Position des Navigationssystems bestimmt werden kann, eine Routenberechnungseinheit, mit der einer Bewegungsroute von einem Startpunkt zu einem Zielpunkt berechnet werden kann, zumindest eine Eingabeeinheit (25, 26), mit der Benutzereingaben getätigt werden können, zumindest eine Ausgabeeinheit (1, 5), mit der Ausgaben an einen Benutzer ausgegeben werden können, zumindest eine Profildatenbank, in der zumindest ein Benutzerprofil, umfassend zumindest eine Benutzereigenschaft, gespeichert werden kann und wobei während des Betriebs des Navigationssystems zumindest ein gespeichertes Benutzerprofil als aktives Benutzerprofil bestimmt werden kann mit folgenden Verfahrensschritten:
a) Bestimmung der aktuellen Position des Navigationssystems (110);
b) Bestimmung des Abstandes und/oder der Abstandsänderung zwischen der aktuellen Position und zumindest einer Grenze eines abgeschlossenen geographischen Gebiets (2, 6, 12) (120);
c) Ausfiltern von relevanten Verkehrs- und/oder Reiseinformationen (7, 13, 14, 15, 19) bezüglich zumindest eines abgeschlossenen Gebiets (2, 6, 12) in Abhängigkeit vom Abstand und/oder von der Abstandsänderung zwischen der aktuellen Position und zumindest einer Grenze von zumindest einem abgeschlossenen geographischen Gebiet (2, 6, 12) und in Abhängigkeit vom aktiven Benutzerprofil;
d) Ausgabe der ausgefilterten Verkehrs- und/oder Reiseinformationen (7, 13, 14, 15, 19) mit der zumindest einen Ausgabeeinrichtung (180).

2. Verfahren nach Anspruch 1,
**dadurch gekennzeichnet,**
**dass** das Navigationssystem zumindest eine Kommunikationseinrichtung umfasst, mittels derer Daten mit einer externen, zentralen Datenverarbeitungseinrichtung austauschbar sind, wobei die Datenverarbeitungseinrichtung zur Verwaltung und Speicherung von Reise-und/oder Verkehrsinformationen (7, 13, 14, 15, 19) bezüglich abgeschlossener Gebiete (2, 6, 12) eingerichtet ist und das Verfahren die zusätzlichen Verfahrensschritte:
b1) Senden einer Datenanfrage umfassend zumindest eine Anfrageinformation an die Datenverarbeitungseinrichtung (130);
b2) Ausfiltern relevanter Reise- und/oder Verkehrsinformationen (7, 13, 14, 15, 19) mittels eines Vergleichs der zumindest einen Anfrageinformation mit den Reise- und Verkehrsinformationen (7, 13, 14, 15, 19) der Datenverarbeitungseinrichtung;
b3) Übermitteln einer Datenantwort von der Datenverarbeitungseinrichtung an das Navigationssystem (150) umfassend relevante Verkehrs- und/oder Reiseinformationen (7, 13, 14, 15, 19), wobei die empfangenen Daten zur Ausfilterung und/oder zur Ausgabe relevanter Verkehrs- und/oder Reiseinformationen (7, 13, 14, 15, 19) verwendet werden;
umfasst.

3. Verfahren nach Anspruch 2,
**dadurch gekennzeichnet,**
**dass** die Datenabfrage in Abhängigkeit vom Abstand und/oder von der Abstandsänderung zwischen der aktuellen Position und zumindest einer Grenze von zumindest einem abgeschlossenen geographischen Gebiet (2, 6, 12) generiert wird und zumindest ein abgeschlossenes geographisches Gebiet (2, 6, 12) in Form einer Anfrageinformation an die Datenverarbeitungseinrichtung gesendet wird.

4. Verfahren nach Anspruch 2 oder 3,
**dadurch gekennzeichnet,**
**dass** in der Datenverarbeitungseinrichtung gespeicherte Reise- und Verkehrsinformationen (7, 13, 14, 15, 19) zumindest einem abgeschlossenen geographischen Gebiete (2, 6, 12) zugeordnet sein können und das Ausfiltern relevanter Reise- und Verkehrsinformationen (7, 13, 14, 15, 19) in Abhängigkeit der empfangenen Anfrageinformationen erfolgt.

5. Verfahren nach einem der Ansprüche 2 bis 4,
**dadurch gekennzeichnet,**
**dass** mittels der Profilspeichereinrichtung standardisierte und/oder benutzerspezifische Benutzerprofile gespeichert werden können, wobei bei einer Datenanfrage zumindest eine Benutzereigenschaften des aktiven Benutzerprofils oder das aktive Benutzerprofil in Form einer Anfrageinformation an die Datenverarbeitungseinrichtung gesendet wird.

6. Verfahren nach einem der Ansprüche 2 bis 5,
**dadurch gekennzeichnet,**
**dass** in der Datenverarbeitungseinrichtung gespeicherte Reise- und Verkehrsinformationen (7, 13, 14, 15, 19) zumindest einem Benutzerprofil und/oder zumindest einer Benutzereigenschaft zugeordnet sein können und das Ausfiltern relevanter Reise- und Verkehrsinformationen (7, 13, 14, 15, 19) in Abhängigkeit der empfangenen Anfrageinformationen erfolgt.

7. Verfahren nach einem der Ansprüche 2 bis 6,
**dadurch gekennzeichnet,**
**dass** bei einer Datenanfrage zumindest ein Teil einer berechneten oder wahrscheinlichen Bewegungsroute (23) innerhalb zumindest eines abgeschlossenen geographischen Gebiets (2, 6, 12) in Form einer Anfrageinformation an die Datenverarbeitungseinrichtung gesendet wird.

8. Verfahren nach einem der Ansprüche 2 bis 7,
**dadurch gekennzeichnet,**
**dass** in der Datenverarbeitungseinrichtung gespeicherte Reise- und Verkehrsinformationen (7, 13, 14, 15, 19) einem geographischen Teilgebiet eines abgeschlossenen geographischen Gebiets (2, 6, 12) zugeordnet sein können und das Ausfiltern relevanter Reise- und Verkehrsinformationen (7, 13, 14, 15, 19) in Abhängigkeit der empfangenen Anfrageinformationen erfolgt.

9. Verfahren nach einem der Ansprüche 2 bis 8,
**dadurch gekennzeichnet,**
**dass** bei einer Datenanfrage der Zeitpunkt der letzten Datenanfrage von Verkehrs- und/oder Reiseinformationen bezüglich des jeweiligen zumindest einen abgeschlossenen geographischen Gebiets (2, 6, 12) in Form einer Anfrageinformationen an die Datenverarbeitungseinrichtung gesendet wird.

10. Verfahren nach einem der Ansprüche 2 bis 9,
**dadurch gekennzeichnet,**
**dass** den in der Datenverarbeitungseinrichtung gespeicherten Reise-und Verkehrsinformationen (7, 13, 14, 15, 19) ein Erstellungs-und/oder Ablaufzeitpunkt zugeordnet sein kann und das Ausfiltern relevanter Reise- und Verkehrsinformationen in Abhängigkeit der empfangenen Anfrageinformationen erfolgt.

11. Verfahren nach einem der Ansprüche 2 bis 10,
**dadurch gekennzeichnet,**
**dass** die mit einer Datenantwort von der Datenverarbeitungseinrichtung empfangenen Verkehrs- und/oder Reiseinformationen (7, 13, 14, 15, 19) in einer Speichereinrichtung des Navigationssystems gespeichert werden, wobei mit den Verkehrs- und/oder Reiseinformationen (7, 13, 14, 15, 19) auch der Zeitpunkt des Empfangs der Datenantwort gespeichert wird.

12. Verfahren nach einem der Ansprüche 2 bis 11,
**dadurch gekennzeichnet,**
**dass** die mit einer Datenantwort von der Datenverarbeitungseinrichtung empfangenen Verkehrs- und/oder Reiseinformationen (7, 13, 14, 15, 19) in Abhängigkeit von der Art der Verkehrs- und/oder Reiseinformationen (7, 13, 14, 15, 19) mit einem Gültigkeitszeitraum im Navigationssystem gespeichert werden.

13. Verfahren nach einem der Ansprüche 2 bis 12,
**dadurch gekennzeichnet,**
**dass** mit der von der Datenverarbeitungseinrichtung empfangenen Datenantwort auch Daten zu Waren und Diensten übermittelt werden, wobei mittels der Daten der Datenantwort die Waren und Dienste über das Navigationssystem angeboten und/oder ausgeführt werden können.

14. Verfahren nach einem der Ansprüche 1 bis 13,
**dadurch gekennzeichnet,**
**dass** das Ausfiltern und Anzeigen relevanter Reise- und Verkehrsinformationen (7, 13, 14, 15, 19) seitens des Navigationssystems und/oder das Erzeugen und Senden einer Datenanfrage auch auf die Verfahrensschritte
a1) Bestimmen eines Zielpunktes einer Route;
b) Bestimmen von Grenzen abgeschlossener geographischer Gebiete (2, 6, 12) zwischen dem Zielpunkt und der aktuellen Position des Navigationssystems;
erfolgen kann.
